Europäisches Patentamt

European Patent Office

Office européen des brevets

(11) Veröffentlichungsnummer: **0 111 030**
**A1**

(12) ## EUROPÄISCHE PATENTANMELDUNG

(21) Anmeldenummer: 82111549.0

(22) Anmeldetag: 13.12.82

(51) Int. Cl.³: **G 06 K 7/016**
**G 07 F 7/02**

(43) Veröffentlichungstag der Anmeldung:
20.06.84 Patentblatt 84/25

(84) Benannte Vertragsstaaten:
AT CH DE FR IT LI

(71) Anmelder: Ski-Data Computer-Handelsgesellschaft
m.b.H.
Berchtesgadener Strasse 10
A-5083 St. Leonhard bei Grödig(AT)

(72) Erfinder: Wallerstorfer, Kurt
Elsa-Brändströmstrasse 4
A-5020 Salzburg(AT)

(72) Erfinder: Dorner, Walter
Woltergasse 40/1
A-1210 Wien(AT)

(74) Vertreter: Haft, Berngruber, Czybulka
Hans-Sachs-Strasse 5
D-8000 München 5(DE)

(54) Abtastvorrichtung zur Ermittlung der Position einer einem Schreib- und/oder Lesegerät zugeführten Berechtigungskarte.

(57) Es wird eine Abtastvorrichtung zur Ermittlung der Position einer von Hand oder maschinell einem Schreib- und/oder Lesegerät (5 bsw. 7) zugeführten Berechtigungskarte (3) beschrieben, die in Bewegungsrichtung die vordere Kante der Karte (3) abtastet. Dazu besteht die Abtastvorrichtung vorzugsweise aus mehreren in Bewegungsrichtung der Karte (3) angeordneten Lichtschranken (8 bis 14).

Fig. 1

EP 0 111 030 A1

Ski-Data Computer-Handelsgesellschaft mbH, Berchtesgadener
Straße 10, 5083 St. Leonhard bei Grödig, Österreich

Abtastvorrichtung zur Ermittlung der Position einer einem
Schreib- und/oder Lesegerät zugeführten Berechtigungskarte

Die Erfindung bezieht sich auf eine Abtastvorrichtung zur
Ermittlung der Position einer von Hand oder maschinell
einem Schreib- und/oder Lesegerät zugeführten Berechtigungskarte.

Derartige Berechtigungskarten weisen ein Datenfeld auf,
auf das das Schreibgerät die Information in Zeilen aufzeichnet bzw. von dem das Lesegerät die aufgezeichnete
Information abliest.

Damit beim Zuführen der Berechtigungskarte eine bestimmte
Zeile des Datenfeldes dem Schreib- oder Lesegerät genau
zugeordnet werden kann, muß die Position der Karte gegenüber dem Schreib- oder Lesegerät genau ermittelt werden
können. Es ist bekannt, sich dazu Vorrichtungen zu bedienen, die mehrere in Bewegungsrichtung auf der Karte
vorgesehene Markierungen abtasten. Beim Abtasten jeder der
Markierungen wird dann ein Takt erzeugt, der bei jeder
Zeile jeweils einen Aufzeichnungs- oder Lesevorgang mit dem
Schreib- bzw. Lesegerät auslöst. Diese Markierungen, die
auch als Taktspur bezeichnet werden, sind insbesondere dann
erforderlich, wenn die Berechtigungskarte dem Schreib- oder Lesegerät von Hand zugeführt wird.

In der europäischen Patentanmeldung Nr. 81 11 04 33.0 wird eine Berechtigungskarte, insbesondere eine Ski-Liftkarte beschrieben, deren Datenfeld durch eine magnetisierbare Schicht gebildet ist. Zwei Spalten in der Mitte des Datenfeldes sind dabei für die Taktspur vorgesehen. Als Abtastvorrichtung für jede der beiden Spalten ist jeweils ein Lesekopf in Form eines Hall-Generators vorgesehen. Es sind zwei Spalten erforderlich, um durch entgegengesetzte Magnetisierung der Spalten hinreichend genaue Taktsignale zu erzeugen. Das Schreibgerät wird dabei durch Elektromagneten und das Lesegerät durch Hall-Generatoren gebildet.

Damit die Karten beispielsweise an der Kasse eines Ski-Lifts beschrieben werden können, muß jede Karte vorher einzeln mit einer solchen Taktspur versehen werden. Andererseits werden beispielsweise in den Alpenländern an die hundert Millionen Ski-Liftkarten je Ski-Saison benötigt. Bei einer derartigen Menge erfordert das Aufbringen einer Taktspur auf jede einzelne Karte einen enormen Zeitaufwand.

Hinzu kommt, daß trotz des Zeitaufwandes die Genauigkeit der Takte und damit die Positionsbestimmung der Karte bei dieser mit Hall-Generatoren abzulesenden Taktspur zu wünschen übrig läßt, so daß durch Addition der einzelnen Fehler bei jedem Aufzeichnungs- und Lesevorgang nach mehreren Aufzeichnungs- und Lesevorgängen fehlerhafte Daten entstehen können. Auch werden zwei Spalten des Datenfeldes von der Taktspur verbraucht, was dann von Nachteil ist, wenn auf einem möglichst kleinen Datenfeld möglichst viele Informationen aufgezeichnet werden sollen.

Der Erfindung, wie sie in den Ansprüchen gekennzeichnet ist, liegt die Aufgabe zugrunde, eine Abtastvorrichtung anzugeben, die es entbehrlich macht, auf der Berechtigungskarte eine Taktspur oder sonstige Markierungen anzubringen, um gegenüber

- 3 -

dem Schreib- oder Lesegerät die Position der Berechtigungskarte zu ermitteln, wenn dieselbe von Hand oder gegebenenfalls maschinell zugeführt wird.

Nachstehend ist eine Ausführungsform der Erfindung anhand
der beigefügten Zeichnung näher erläutert. Darin zeigen
jeweils schematisch:

Figur 1     einen Schnitt durch ein Schreib- und Lesegerät mit einer Abtastvorrichtung zur
Ermittlung der Position einer von Hand
zugeführten Berechtigungskarte; und

Figur 2     eine Draufsicht auf die untere Platte des
Schreib- und Lesegerätes.

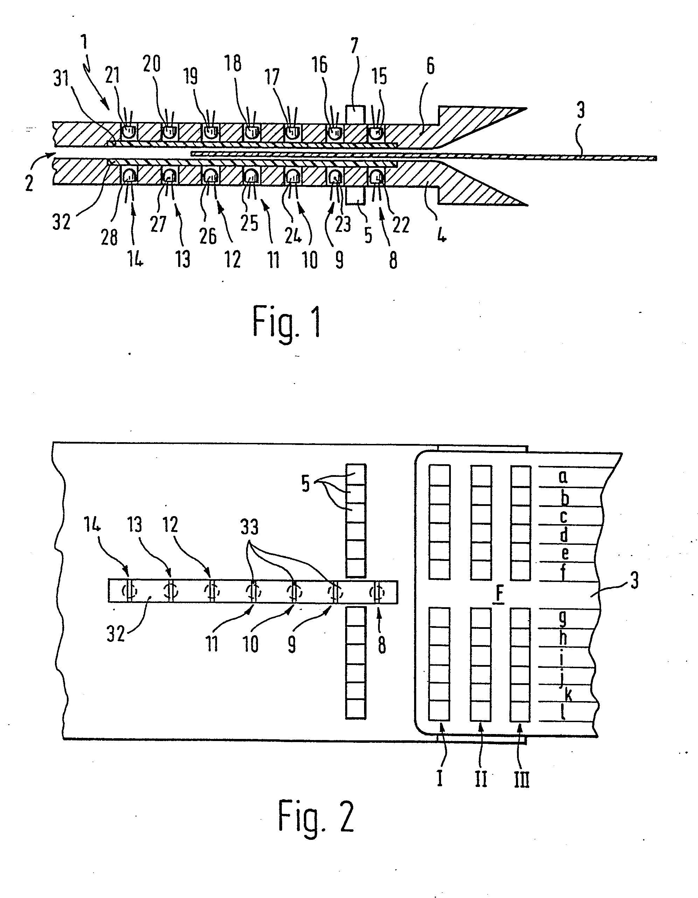

Gemäß Figur 1 ist in einem Gehäuse 1 ein Schlitz 2 vorgesehen, in den eine Berechtigungskarte 3 teilweise eingeschoben ist.

Auf der unteren Platte 4 des Gehäuses 1, die die Unterseite
des Schlitzes 2 bildet, sind als Schreibköpfe dienende
Elektromagneten 5 in einer Reihe quer zur Bewegungsrichtung
der Karte 3 angeordnet. Den Schreibköpfen bzw. Elektromagneten 5 gegenüberliegend sind auf der oberen Platte 6
des Gehäuses 1, die die Oberseite des Schlitzes 2 bildet,
Leseköpfe in Form von Hall-Generatoren 7 angeordnet, und
zwar ist jedem Schreibkopf bzw. Elektromagneten 5 genau
gegenüberliegend ein Lesekopf bzw. Hall-Generator 7 zugeordnet.

Die Berechtigungskarte besteht aus einem Träger beispielsweise aus Kunststoff auf dem eine magnetisierbare Schicht
vorgesehen ist. Auf der magnetisierbaren Schicht kann eine Abdeckfolie angeordnet sein. Die magnetisierbare Schicht bildet
ein Datenfeld F, auf das die Schreibköpfe bzw. Elektromagneten 5 die kodierte Information aufzeichnen bzw. von der die Leseköpfe bzw. Hall-Generatoren 7 die aufgezeichnete kodierte Information ablesen. Das Datenfeld F ist dazu beispielsweise in sieben Zeilen oder Bits I, II, III ... und zwölf Spalten a, b, c ... unterteilt, wie aus Figur 2 ersichtlich. Um das Datenfeld F deutlicher darzustellen, ist in Figur 2 die Karte 3 am Beginn des Hineinschiebens bzw. am Ende des Herausziehens in bzw. aus dem Schlitz 2 wiedergegeben.

Damit die Schreibköpfe oder Elektromagneten 5 die Daten genau in die jeweilige Zeile I, II, III ... schreiben, bzw. die Leseköpfe oder Hall-Generatoren 7 die Daten genau von der jeweiligen Zeile I, II, III ablesen, muß die Position der Karte 3 bzw. des Datenfeldes F gegenüber den Elektromagneten 5 bzw. Hall-Generatoren genau ermittelt werden können.

Dazu sind die Bewegungsrichtung der Karte 3 mehrere entlang dem Schlitz 2 angeordnete Lichtschranken 8 bis 14 vorgesehen, die beim Einschieben oder gegebenenfalls beim Herausziehen die vordere Kante der Karte 3 abtasten.

Wenn die vordere Kante der Karte 3 beim Einschieben in den Schlitz 2 in die erste Lichtschranke 8 gerät, werden die Potentiale der einzelnen Hall-Generatoren 7 genau festgelegt. Diese Potentiale stellen die relativen Nullwerte für das nachfolgende Lesen der Information in den Zeilen I, II, III ... des Datenfeldes F beim Einschieben der Karte 3 dar. Ein Hall-Generator weist nämlich eine Art Schwingkreis auf. Die Amplituden dieses Schwingkreises sind ständigen Schwankungen unterworfen, beispielsweise stark temperaturabhängig. Zum Zeitpunkt der Abtastung mit der ersten Lichtschranke 8 wird also der Wert des Potentials des noch nicht erregten Hall-Generators 7 für das Lesen der Daten der Spalte a z.B. mit 1,5 mV der Wert des Potentials des noch nicht erregten Hall-Generators 7 für das Lesen der Daten der Spalte b z.B. mit 1,7 mV usw. ermittelt.

Sobald die vordere Karte 3 in die zweite Lichtschranke 9 gerät, wird dann ein Schaltvorgang ausgelöst, durch den mittels der Schreibköpfe 5 bzw. Leseköpfe 7 die Zeile I des Datenfeldes F beschrieben bzw. abgelesen wird. Das Potential der Lesesignale wird dabei gebildet aus dem absoluten Wert minus dem relativen Nullwert, der in der vorstehend beschriebenen Weise beim Passieren der ersten Lichtschranke 8 ermittelt und festgelegt wird. Gelangt dann die Karte 3 zur nächsten Lichtschranke 9 beschreiben die Schreibköpfe 5 die Zeile II bzw. lesen die Leseköpfe 7 von der Zeile II des Datenfeldes F ab. Dieser Vorgang wiederholt sich beim Einschieben der Karte 3 bis die letzte Lichtschranke 14 erreicht ist, also die letzte (in Figur 2 nicht dargestellte) Zeile VII des Datenfeldes F mit den Schreibköpfen 5 beschrieben bzw. von derselben mit den Leseköpfen 7 abgelesen worden ist.

Es können weitere Lichtschranken zwischen den vorstehend beschriebenen und in der Zeichnung gezeigten Lichtschranken 8 bis 14 vorgesehen sein. Bei einer Karte 3, die z.B. in den ersten drei Zeilen I, II und III des Datenfeldes F unveränderbare Daten (wie Name der Liftgesellschaft, Karten, art, z.B. Kinderkarte, Wochenskipaß) und in den nachfolgenden Zeilen veränderbare Daten (wie erster Gültigkeitstag, Uhrzeit, noch vorhandene Punktezahl) aufweist, hat sich beispielsweise eine zusätzliche Lichtschranke zwischen den Lichtschranken 11 und 12 als vorteilhaft erwiesen. Diese Anordnung der unveränderbaren Daten in der oder den beim Einschieben in den Schlitz 2 ersten Zeilen I, II, III ..., d.h. bei diesem Beispiel in den Zeilen I, II und III, und der veränderbaren Daten in den nachfolgenden Zeilen des Datenfeldes F der Karte 3 sowie die zusätzliche Lichtschranke hat folgenden Grund. Die Geschwindigkeit der Karte 3 beim Einschieben und Herausziehen in bzw. aus dem Schlitz 2 ist am geringsten, nämlich null, wenn sie die hinterste Position im Schlitz 2 erreicht (ggf. durch Auftreffen auf einen Anschlag im Schlitz 2 hinter der Lichtschranke 14) und damit sich ihre Bewegungsrichtung umkehrt. Die neuen (veränderbaren) Daten werden beim Herausziehen von den Schreibköpfen bzw. Elektromagneten 5 auf das Datenfeld F der Karte 3 geschrieben. Die letzte (in Figur 2 nicht dargestellte) Zeile des Datenfeldes F wird also praktisch im Ruhezustand der Karte 3, die vorletzte (in Figur 2 nicht dargestellte) Zeile bei noch relativ geringer Geschwindigkeit und die folgenden der Zeile III zunehmend benachbarten Zeilen bei zunehmender Geschwindigkeit der Karte 3 beim Herausziehen beschrieben. Um nun ein Überschreiben der unveränderbaren Daten in den Zeilen I, II und III mit veränderbaren Daten aufgrund der hohen Geschwindigkeit der Karte 3 gegen Ende des Herausziehens aus dem Schlitz 2 auszuschließen, ist die zwischen den Lichtschranken 11 und 12 angeordnete zusätzliche Lichtschranke vorgesehen, die, wenn sie passiert wird, bewirkt, daß jeglicher Schreibvorgang schlagartig unterbrochen wird.

Jeder der Lichtschranken 8 bis 14 besteht aus einer Infrarot-Lichtquelle oder -Diode 15 bis 21, der jeweils genau gegenüberliegend ein Infrarot-Lichtempfänger oder -Fototransistor 22 bis 28 zugeordnet ist. Die Infrarot-Lichtquellen 15 bis 21 und die Infrarot-Lichtempfänger 22 bis 28 sind dazu in entsprechenden Bohrungen in der oberen Platte 6 bzw. in der unteren Platte 4 des Gehäuses 1 angeordnet.

Zum Schutz der Infrarot-Lichtquellen bzw. -Dioden 15 bis 21 und der Infrarot-Lichtempfänger bzw. -Transistoren 22 bis 28 ist in die obere Platte 6 sowie die unter Platte 4 in einer Ausfräsung eine infrarotdurchlässige streifenförmige Kunst-

-7-

stoffplatte 31 bzw. 32 z. B. aus Polyester eingegossen.

Weiterhin ist vor jedem Infrarot-Empfänger 22 bis 28 jeweils eine schlitzförmige Blende 33 vorgesehen. Dadurch wird bereits bei einem geringfügigen Abdecken einer Blende 33 der Schaltvorgang zum Beschreiben bzw. Lesen mittels der Schreibköpfe 5 bzw. Leseköpfe 7 ausgelöst. Die Breite der Öffnung der schlitzförmigen Blenden 33 beträgt etwa 0,5 mm.

Die Blenden 33 werden durch Aufprägen einer metallisierten Prägefolie auf die dem Schlitz 2 abgewandte Seite der Kunststoffplatte 32 hervorgebracht.

In der Zeichnung sind die Lichtschranken 8 bis 14 in einer Reihe hintereinander angeordnet dargestellt. Falls ein geringer Abstand der Lichtschranken in Bewegungsrichtung der Karte 3 erwünscht ist, also ein geringerer Abstand zwischen den Zeilen I, II, III ... des Datenfeldes F, können die Lichtschranken auch seitlich versetzt zueinander, also in der Draufsicht gemäß Figur 2 beispielsweise treppenförmig angeordnet sein.

Infrarot-Lichtschranken werden gegenüber solchen, die mit sichtbarem Licht arbeiten, bevorzugt, weil Infrarot-Lichtschranken gegenüber Verschmutzung unempfindlicher sind.

Falls lediglich die magnetisierbare Schicht infrarotlichtundurchlässig ist, hingegen die übrigen Bestandteile der Karte 3, also der Träger und die Abdeckfolie, Infrarotlicht hindurchlassen und sich die magnetisierbare Schicht nicht bis zur vorderen Kante der Karte 3 erstreckt, sprechen die IR-Lichtschranken freilich nicht auf die vordere Kante der Karte 3, sondern auf die vordere Kante der magnetisierbaren Schicht der Karte 3 an.

Bei einer Deformation oder sonstigen Beschädigungen der vorderen Kante der Karte 3 nach dem Beschreiben des Datenfeldes F geben die Lichtschranken 8 bis 14, wie sonst auch, den Leseköpfen 7 den Lesebefehl. Da jedoch in diesem Fall die Leseköpfe 7 keine Daten von der Karte 3 bzw. dem Datenfeld F ablesen können, ist vorgesehen, daß das Lesegerät ein "Karte ungültig"-Signal auslöst.

Auch kann, um einer Deformation oder Beschädigung der vorderen Kante der Karte 3 vorzubeugen, die infrarotlichtundurchlässige magnetisierbare Schicht im Abstand von der vorderen Kante der Karte 3 angeordnet sein.

Anstelle der Lichtschranken kann auch ein Winkelkodierer zur Abtastung der vorderen Kante der Karte 3 vorgesehen sein, der über einen Hebel an der in Bewegungsrichtung vorderen Kante der Karte 3 angreift. Der Hebel ist dabei entgegen der Bewegungsrichtung der Karte federbelastet.

Schreibgeräte mit maschineller Kartenzufuhr sind vor allem an Automaten und bedienten Kassen zweckmäßig, wo die Berechtigungskarten beim Kauf das erstemal beschrieben werden. Jedoch ist die erfindungsgemäße Abtastvorrichtung vor allem auf eine Zufuhr der Karte zum Schreib- und Lesegerät von Hand abgestellt. Derartige Schreib- und Lesegeräte können beispielsweise an den Zugängen der einzelnen zu einem Verbund zusammengeschlossenen Skilifte eines Wintersportgebietes vorgesehen sein.

-9-

<u>P a t e n t a n s p r ü c h e</u>

1. Abtastvorrichtung zur Ermittlung der Position einer
   von Hand oder maschinell einem Schreib- und/oder Lesegerät (5 bzw. 7) zugeführten Berechtigungskarte (3),
   dadurch gekennzeichnet, daß sie die in Bewegungsrichtung vordere Kante der Karte (3) oder einer Schicht
   der Karte (3) abtastet.

2. Abtastvorrichtung nach Anspruch 1, dadurch gekennzeichnet, daß sie aus mehreren in Bewegungsrichtung der
   Karte (3) angeordneten Lichtschranken (8 bis 14) besteht.

3. Abtastvorrichtung nach Anspruch 2, dadurch gekennzeichnet, daß jede der Lichtschranken (8 bis 14) durch
   eine Infrarot-Lichtquelle (15 bis 21) und einen Infrarot-Lichtempfänger (22 bis 28) gebildet ist.

4. Abtastvorrichtung nach Anspruch 2 oder 3, dadurch gekennzeichnet, daß jede Lichtschranke (18 bis 14) eine
   vorzugsweise vor dem Licht- bzw. Infrarot-Lichtempfänger
   (22 bis 28) angeordnete Blende (33) aufweist.

5. Abtastvorrichtung nach einem der Ansprüche 2 bis 4,
   dadurch gekennzeichnet, daß die Lichtschranken (8 bis 14)
   in Bewegungsrichtung der Karte (3) versetzt zueinander
   angeordnet sind.

6. Abtastvorrichtung nach Anspruch 3, dadurch gekennzeichnet, daß die Berechtigungskarte (3) eine magnetisierbare Schicht auf einem Träger aufweist, auf die
   bzw. von der das Schreib- bzw. Lesegerät (5 bzw. 6)
   auf ein Datenfeld (F) magnetische Daten aufzeichnet
   bzw. abliest, und die jeweils durch eine Infrarot-
   Lichtquelle (15 bis 21) und einen Infrarot-Lichtempfänger
   (22 bis 28) gebildeten Lichtschranken (8 bis 14) die

-10-

in Bewegungsrichtung vordere Kante der magnetisierbaren Schicht abtasten.

7. Abtastvorrichtung nach Anspruch 6, dadurch gekennzeichnet, daß das Schreibgerät (5) einen oder mehrere nebeneinander angeordnete Elektromagneten und das Lesegerät (7) einen oder mehrere nebeneinander angeordnete Hall-Generatoren aufweist , und daß in Bewegungsrichtung bei Zufuhr der Karte (3) die erste Lichtschranke (8) vor dem bzw. den Elektromagneten bzw. Hall-Generatoren angeordnet ist.

8. Abtastvorrichtung nach einem der vorstehenden Ansprüche, dadurch gekennzeichnet, daß das Datenfeld (F) der Karte (3) mit unveränderbaren Daten in der bzw. den in Bewegungsrichtung bei Zufuhr der Karte (3) ersten Zeilen (I, II und III) und mit veränderbaren Daten in den nachfolgenden Zeilen beschrieben wird, und eine zusätzliche Lichtschranke zwischen jener Lichtschranke (11), die der bei Zufuhr der Karte (3) letzten Zeile (III) der unveränderbaren Daten zugeordnet ist, und jener Lichtschranke (12), die der bei Zufuhr der Karte (3) ersten Zeile der veränderbaren Daten zugeordnet ist, vorgesehen ist.

9. Abtastvorrichtung nach Anspruch 1, dadurch gekennzeichnet, daß sie aus einem Winkelkodierer besteht, der über einen entgegen der Bewegungsrichtung der Karte belasteten Hebel an der vorderen Kante der Karte angreift.

Fig. 1

Fig. 2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl ³) |
|---|---|---|---|
| X | US-A-4 134 539  (D. HOPKINSON)  * Zusammenfassung; Abbildungen 1-10; Spalte 4, Zeile 63 - Spalte 5, Zeile 66 * | 1,2,6,7 | G 06 K    7/016 G 07 F    7/02 |
| | --- | | |
| X | FR-A-2 308 147  (H. LECHNER) * Ansprüche; Abbildungen 4-9 * | 1-4 | |
| | --- | | |
| A | CH-A-  587 525  (ELECTRONICS FINANCIAL LTD.) * Ansprüche; Abbildungen 1,2; Spalte 6, Zeile 58 - Spalte 8, Zeile 7 * | 1,2,6,8 | |
| | --- | | |
| A | GB-A-  858 391  (INTERNATIONAL COMPUTERS & TABULATORS LTD.) * Ansprüche; Abbildungen * | 1,5 | |
| | | | **RECHERCHIERTE SACHGEBIETE (Int. Cl. ³)** |
| | --- | | |
| A | EP-A-0 006 625  (PERIPHERAL DYNAMICS) * Zusammenfassung; Abbildungen * | 1,9 | G 06 K    7/08 G 06 K    7/016 G 06 K   13/08 G 07 F    7/00 G 07 F    7/02 |
| | --- | | |
| A | US-A-3 993 893  (M. GRAF) * Zusammenfassung; Abbildungen 1,2; Spalte 1, Zeile 63 - Spalte 2, Zeile 31 * | 1,2 | G 07 F    7/08 G 07 F    7/10 G 07 C    9/00 G 07 C   11/00 G 07 B   11/00 G 07 B   11/11 |
| | --- | | |
| A | US-A-3 763 355  (J.L. BRAND) * Zusammenfassung; Abbildungen 1,2,5-8 * | 1,2 | |
| | ---          -/- | | |

Der vorliegende Recherchenbericht wurde für alle Patentansprüche erstellt.

| Recherchenort | Abschlußdatum der Recherche | Prüfer |
|---|---|---|
| DEN HAAG | 01-09-1983 | DAVID J.Y.H. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 176 783 (H. EPPICH)<br>* Zusammenfassung; Abbildungen * | 1,9 | |

-----

RECHERCHIERTE SACHGEBIETE (Int Cl ³)

Der vorliegende Recherchenbericht wurde für alle Patentansprüche erstellt.

| Recherchenort<br>DEN HAAG | Abschlußdatum der Recherche<br>01-09-1983 | Prüfer<br>DAVID J.Y.H. |
|---|---|---|